# EUROPEAN PATENT SPECIFICATION

(11) **EP 2 594 471 B1**
(45) Date of publication and mention of the grant of the patent: **18.11.2015**
(21) Application number: 11806420.3
(22) Date of filing: 31.05.2011
(51) Int. Cl.: B62M 6/80, H01H 13/04, B62K 23/02, H01H 13/06, H01H 9/06

(54) **SWITCH DEVICE FOR ELECTRIC BICYCLE AND ELECTRIC BICYCLE**
SCHALTVORRICHTUNG FÜR EIN ELEKTROFAHRRAD UND ELEKTROFAHRRAD
DISPOSITIF D'INTERRUPTEUR POUR BICYCLETTE ÉLECTRIQUE, ET BICYCLETTE ÉLECTRIQUE

(30) Priority: 12.07.2010 JP 2010157394
(43) Date of publication of application: 22.05.2013
(73) Proprietor: Panasonic Corporation, Kadoma-shi Osaka 571-8501 (JP)
(72) Inventor: OGAWA, Mitsuru, Osaka 540-6207 (JP); OBITA, Naoki, Osaka 540-6207 (JP)
(74) Representative: Grünecker Patent- und Rechtsanwälte PartG mbB
(86) International application number: PCT/JP2011/003019
(87) International publication number: WO 2012/008083

(56) References cited:
- EP-A2- 1 188 653
- JP-A- H 117 863
- JP-A- 9 207 862
- JP-A- 9 286 374
- JP-A- 11 007 863
- JP-A- 409 286 374
- JP-A- 2002 087 370
- JP-U- S5 681 424
- JP-U- 55 071 979
- JP-U- 55 178 479
- JP-U- 56 081 424
- US-A- 5 651 485
- US-A1- 2006 256 510

## Description

### Technical Field

The present invention relates to a switch device for an electric bicycle, the switch device being attached to a handlebar on the electric bicycle that can be driven by an auxiliary driving force generated by an electric motor in addition to a human power.

### Background Art

A known electric bicycle can be driven by an auxiliary driving force generated by an electric motor in addition to a human power. Such an electric bicycle is driven by an auxiliary driving force generated by an electric motor and thus is provided with a switch device for setting and switching various motor functions such as an output of an auxiliary driving force. The switch device is capable of switching the motor functions even during riding and is attached, in many cases, to a handlebar to enable a manual operation during riding. Since electric bicycles are used outdoors, switch devices containing electric circuits need to be waterproof to a certain degree.

Such a switch device includes a contact part that is also called a tact switch. In many cases, such a contact part is switched by a pressing force of an operation push button. Such switch devices are disclosed in, for example, Patent Literatures 1 to 3 and so on. The contact part is disposed in a housing (case) while the operation push button exposed out of the housing is attached in an extendable and retractable manner. The housing further contains an elastic transmission member that transmits a pressing operation of the push button to the contact part while being elastically deformed. The elastic transmission member is called an operation rod in Patent Literature 1, an elastic member in Patent Literature 2, and an elastic protective member in Patent Literature 3. Patent Literature 1 discloses a structure including a waterproof sealing member with the elastic transmission member penetrating the waterproof sealing member. In Patent Literature 3, the elastic transmission member provides waterproofness. The switch device having such a structure can achieve a certain degree of durability and waterproofness.

A switch device according to the preamble of claim 1 is known from JP 356081424. Further, JP H11 7863 A relates to a switch box, wherein ON/OFF of a power source is performed by moving a rib portion when an operation body is operated.

### Citation List

### Patent Literatures

Patent Literature 1: Japanese Patent Laid-Open No.
2002-42603 Patent Literature 2: Japanese Patent Laid-Open No.
2007-95601 Patent Literature 3: Japanese Patent Laid-Open No. 2004-273208

### Summary of Invention

### Technical Problems

The switch devices disclosed in Patent Literatures 1 to 3 and so on are assembled into a part of an electrical apparatus, e.g., a speaker microphone. Thus, it is not assumed that the switch devices are used on a rigid body, e.g., the handlebar of an electric bicycle. When being attached to the handlebar of an electric bicycle, such a switch device may be fixed to a mounting band section substantially C-shaped in side view (having a notch in the circumferential direction). In this case, the housing section of the switch device and the mounting band section are integrally formed to reduce the number of components and the manufacturing cost.

The housing of the switch device for satisfactorily supporting the push button is preferably made of a relatively hard material. However, the mounting band section integrally formed with the housing is also made of a hard material, leading to difficulty in largely curving the mounting band section. The switch device needs to be attached through the end of the handlebar with the slightly curved mounting band section, which may increase time and effort for the attachment of the switch device. Specifically, since brake levers or the like are attached to the ends of the handlebar of the electric bicycle, the attachment of the switch device to the handlebar requires the removal of the brake levers or grip sections on the handlebar, further requiring an extended time period and considerable effort. In the case where a large-diameter section for a gear shifting operation is provided on the end of the handlebar, the switch device may not be attachable through the end of the handlebar.

The brake lever also includes a mounting band section and is mounted on the handlebar through the mounting band section. In the case where the brake lever is mounted close to the switch device, the mounting band section of the brake lever and the switch device are likely to interfere with each other. Thus, in order to avoid this problem, the switch device may be separated from the location of the brake lever. In this case, however, the switch device is located near the center of the handlebar, leading to difficulty in manually operating the switch device during riding. Thus, the operability may decrease.

Moreover, in the case where the contact part is mounted on a substrate having a resistor or the like in the switch device, the substrate may be insufficiently waterproof.

The present invention has been devised to solve the problems. An object of the present invention is to provide a switch device for an electric bicycle, the switch device being efficiently attachable to a handlebar with high operability and waterproofness on a substrate.

### Solution to Problems

In order to solve the problems, the present invention is a switch device for an electric bicycle as defined in claim 1.

With this configuration, the first housing section that supports the push button in an extendable and retractable manner is made of a harder material than the second housing section. This allows the first housing section to have relatively high rigidity. Thus, the push button can be satisfactorily supported by the first housing section having relatively high rigidity. Moreover, the second housing section and the mounting band section are made of a softer material than the first housing section. Hence, when the switch device is attached to the handlebar, the mounting band section is easily curved and the largely curved mounting band section can be directly fit onto the handlebar in a state in which a brake lever is attached to the handlebar.

The present invention further includes a recessed section formed on the second housing section such that a brake-lever mounting band section for attaching the brake lever to the handlebar is fit between the second housing section and the handlebar.

With this configuration, even if the switch device and the brake lever are adjacent to each other, the brake-lever mounting band section fit into the recessed section prevents the switch device and the brake-lever mounting band section from interfering with each other, causing no problems. Thus, the switch device can be located next to the brake lever on the handlebar, that is, near a grip section on the handlebar, thereby preventing problems such as difficulty in operating the push button of the switch device.

According to the present invention, the push button is attached while being supported in the first housing section in an extendable and retractable manner. With this configuration, even if the push button cannot fully extend or retract because of damage on the push button or foreign matters between the push button and the first housing section, it is only necessary to change the push button and the first housing section. Therefore, the cost of repair can be minimized.

The present invention further includes a substrate bearing the contact part, the substrate being disposed in the second housing section while being covered with a sealer such as resin. With this configuration, even if rain or the like enters the housing, the substrate covered with resin is not soaked in water, causing no problems.

According to the present invention, the first housing section and the second housing section are joined to each other by housing connecting screws, the first housing section includes connecting claw sections that are integrated with the first housing section and are capable of being engaged with the second housing section, and the first housing section and the second housing section are joined to each other also by the connecting claw sections. With this configuration, even if the screws for fixing the first housing section and the second housing section are loosened or removed, the connecting claw sections formed on the first housing section are engaged with the second housing section so as to prevent the separation of the first housing section and the second housing section.

According to the present invention, the first housing section is disposed in an upper half of the housing while the second housing section is disposed in a lower half of the housing, a joint part between the first housing section and the second housing section is covered with the lower-end outer edge of the first housing section, and an insertion hole for the insertion of the claw section formed on the first housing section is formed partially on the side of the second housing section, the insertion hole vertically penetrating the second housing section.

With this configuration, even if rain or the like flows to the second housing section from the first housing section, the joint part between the first housing section and the second housing section is covered with the lower-end outer edge of the first housing section, thereby preventing the entry of the rain or the like through the joint part between the first housing section and the second housing section. Moreover, the insertion hole for the insertion of the claw section formed on the first housing section is formed partially on the side of the second housing section, the insertion hole vertically penetrating the second housing section. Thus, even if rain or the like enters the insertion hole through the claw section, the rain or the like is discharged to the outside from an opening at the lower end of the insertion hole.

An electric bicycle according to the present invention includes the switch device. In this case, the switch device is preferably attached to the electric bicycle that enables self-riding without pedaling when the push button of the switch device is pressed to turn on the contact part.

### Advantageous Effects of Invention

According to the present invention, the second housing section and the mounting band section are integrally formed while the second housing section and the mounting band section are made of a softer material than the first housing section. Thus, the push button can be satisfactorily supported by the first housing section having relatively high rigidity; meanwhile, the switch device to be attached to the handlebar can be directly fit onto the handlebar while curving the mounting band section made of a soft material. Consequently, the switch device can be efficiently attached to the handlebar.

The recessed section is formed on the second housing section such that the brake-lever mounting band section for attaching the brake lever to the handlebar is fit between the second housing section and the handlebar. Thus, the switch device can be located next to the brake lever on the handlebar, that is, near the grip section on the handlebar, improving the operability of the push button of the switch device.

Moreover, the push button having the operation pressing section is attached while being supported in the first housing section in an extendable and retractable manner. With this configuration, even if the push button cannot fully extend or retract because of damage on the push button or foreign matters between the push button and the first housing section, it is only necessary to change the push button and the first housing section. Therefore, the cost of repair can be minimized.

Furthermore, the substrate bearing the contact part is disposed in the second housing section while being covered with a sealer such as resin. With this configuration, even if rain or the like enters the housing, the substrate covered with resin is not soaked in water, causing no problems. Hence, the reliability of the switch device can be improved.

Moreover, the first housing section and the second housing section are joined to each other by the housing connecting screws, the first housing section includes the connecting claw sections that are integrated with the first housing section and are capable of being engaged with the second housing section, and the first housing section and the second housing section are joined to each other also by the connecting claw sections. With this configuration, even if the screws for fixing the first housing section and the second housing section are loosened or removed, the connecting claw sections formed on the first housing section are engaged with the second housing section so as to prevent the separation of the first housing section and the second housing section, keeping high reliability. This configuration also improves the reliability of the switch device.

Furthermore, the first housing section is disposed in the upper half of the housing while the second housing section is disposed in the lower half of the housing, the joint part between the first housing section and the second housing section is covered with the lower-end outer edge of the first housing section, the insertion hole for the insertion of the claw section formed on the first housing section is formed partially on the side of the second housing section, the insertion hole vertically penetrating the second housing section. Thus, high waterproofness can be kept.

### Brief Description of Drawings

[FIG. 1] FIG. 1 is an overall side view of an electric bicycle including a switch device according to an embodiment of the present invention.
[FIG. 2] FIG. 2 illustrates a handlebar and so on of the electric bicycle.
[FIG. 3] FIG. 3 is a perspective view illustrating the switch device of the electric bicycle.
[FIG. 4] FIG. 4 is a longitudinal sectional view illustrating the switch device.
[FIG. 5] FIG. 5 is an exploded perspective view of the switch device.
[FIG. 6] FIG. 6 is a side view of the switch device.
[FIG. 7] FIG. 7 is a bottom view of the switch device.
[FIG. 8] FIG. 8 is a cross-sectional view illustrating a switch device for an electric bicycle according to another embodiment of the present invention.

### Description of Embodiments

An electric bicycle including a switch device for the electric bicycle according to an embodiment of the present invention will be described below with reference to the accompanying drawings.

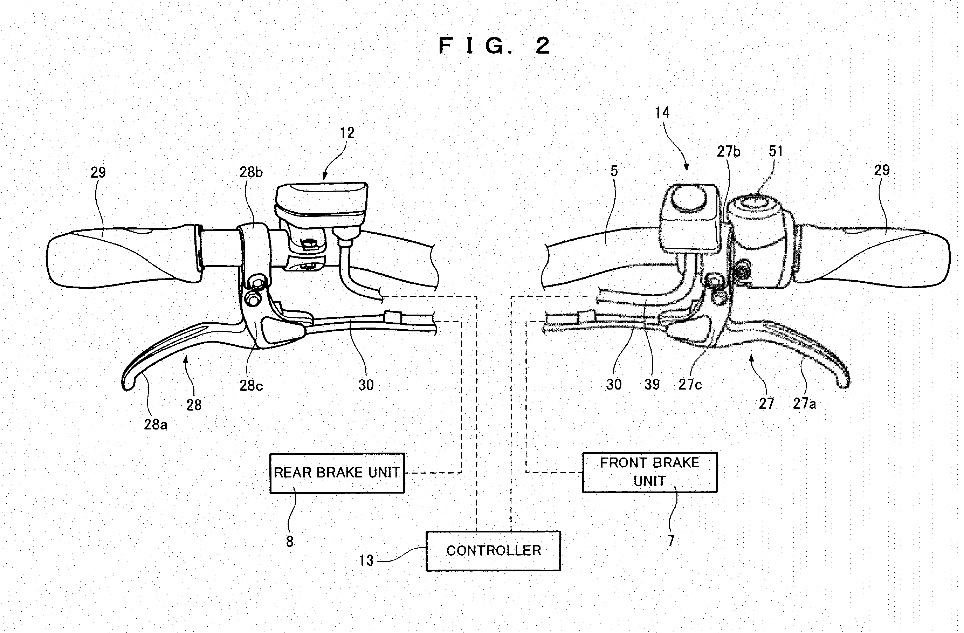

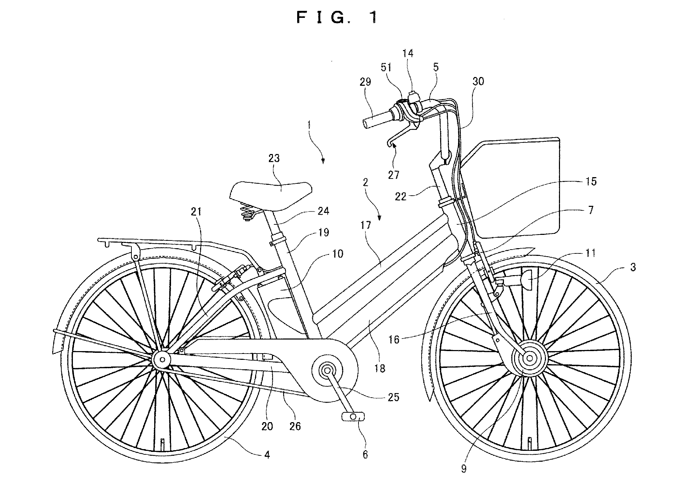

As illustrated in FIGS. 1 and 2, reference numeral 1 denotes an electric bicycle. The electric bicycle 1 includes a frame 2, a front wheel 3, a rear wheel 4, a handlebar (also referred to as a handle bar) 5, a handlebar stem 22, a saddle 23, pedals 6, a front brake unit 7, a rear brake unit 8, a motor driving unit 9 that includes an electric motor (not shown) for generating an auxiliary driving force (assistance force), a battery 10 that includes a secondary battery for supplying driving power to the electric motor of the motor driving unit 9, a light (front light) 11, an operating section 12, and a controller 13. The electric bicycle 1 includes a switch device 14 for the electric bicycle according to the embodiment of the present invention, in addition to these constituent elements.

As illustrated in FIG. 1 and so on, the frame 2 includes a head tube 15, a front fork 16, a top tube 17, a down tube 18, a seat tube 19, chain stays 20, and a rear fork 21. The front wheel 3 is rotatably assembled to the lower end of the front fork 16. The rear wheel 4 is rotatably assembled to the rear end of the chain stay 20. The handlebar 5 and the handlebar stem 22 are inserted into the head tube 15 from above and are assembled so as to rotate with the front fork 16. The saddle 23 is attached to the upper end of a seat post 24 inserted into the seat tube 19. The pedals 6 are rotatably attached to two ends of a crank 25 to receive a pedal force that is a human power. The rear wheel 4 is rotatingly driven by an input driving force based on a pedal force applied to the pedals 6, through a crank gear (not shown) that rotates with a crank shaft, a chain 26, a rear gear connected to the hub of the rear wheel, and so on. As illustrated in FIG. 1, the motor driving unit 9 is disposed in a front hub in the electric bicycle 1. The location of the motor driving unit 9 is not limited to the front hub and thus the motor driving unit 9 may be disposed under the battery 10 or in the rear hub.

The electric bicycle 1 can be driven by an auxiliary driving force generated by the electric motor of the motor driving unit 9 in addition to a human power. Particularly, self-riding of the electric bicycle 1 is enabled by an output of an auxiliary driving force without pressing the pedals 6, that is, without applying a human power. In the case where the electric bicycle 1 does not travel by itself, a pedal force applied to the pedals 6 is detected by a torque sensor disposed near the crank shaft, thereby outputting an auxiliary driving force according to the pedal force (human power). Furthermore, a push button 32 of the switch device 14, which will be described later, is pressed to turn on a contact part 33, enabling self-riding of the electric bicycle 1 without pressing the pedals 6.

As illustrated in FIG. 2 and so on, grip sections 29 held by a rider are provided on two ends of the handlebar 5. Moreover, a brake lever 27 for activating the front brake unit 7 and a brake lever 28 for activating the rear brake unit 8 are attached near the grip sections 29 on the handlebar 5. Furthermore, the operating section 12, the switch device 14, a gear shifting unit 51, and so on are attached near the grip sections 29. The brake levers 27 and 28 include brake lever bodies 27a and 28a that are attached so as to swing via brake-lever mounting band sections 27b and 28b fit over the handlebar 5 and lever bases 27c and 28c attached to the brake-lever mounting band sections 27b and 28b. When the brake lever bodies 27a and 28a are operated, for example, by pulling with hands, the operation is transmitted to the front brake unit 7 and the rear brake unit 8 through wire cables 30, activating the front brake unit 7 and the rear brake unit 8. The gear shifting unit 51 enables manual shifting of gears in a gear changer installed in the rear hub. The gear shifting unit 51 is larger in diameter than the handlebar 5.

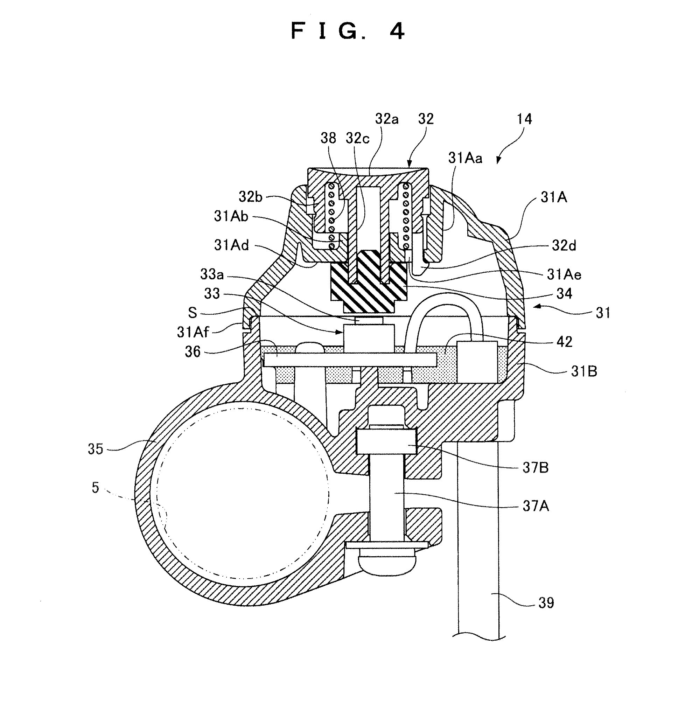

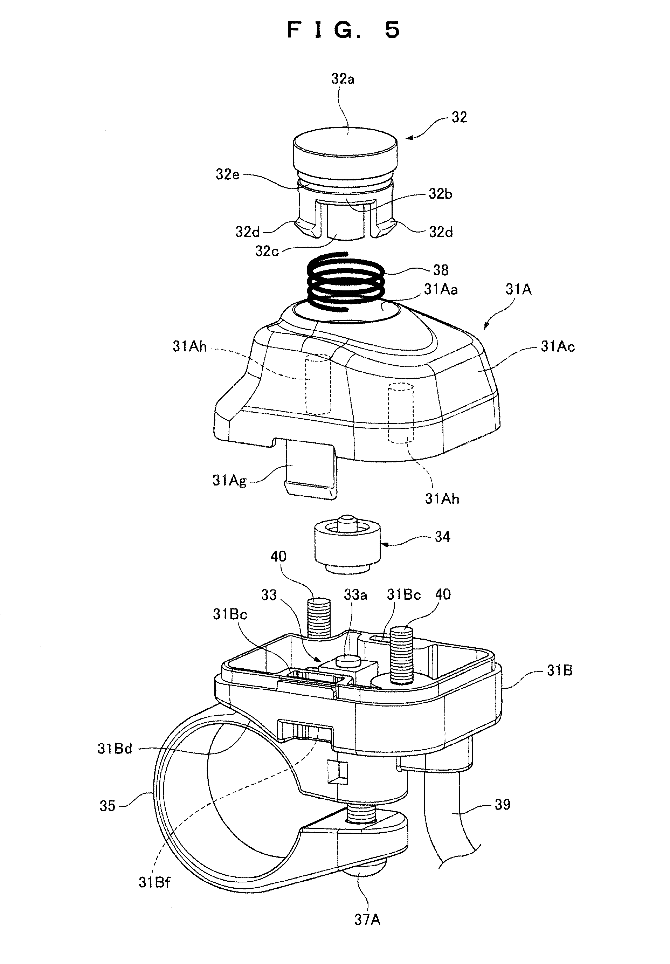

The switch device 14 is located quite close to the brake-lever mounting band section 27b of the brake lever 27 for activating the front brake unit 7. As illustrated in FIGS. 4 and 5 and so on, the switch device 14 includes a housing (case) 31, the push button 32, the contact part 33, an elastic transmission member 34, a mounting band section 35, a substrate 36, and a biasing spring 38 acting as a biasing member. The housing 31 includes a first housing section 31A and a second housing section 31B. In this embodiment, the first housing section 31A is an upper half of the housing 31 while the second housing section 31B is a lower half of the housing 31. The push button 32 includes an operation pressing section 32a. The pressing section 32a exposed to the outside from the first housing section 31A is attached in an extendable and retractable manner. The contact part 33 is also called a tact switch. The contact part 33 is disposed with waterproofness in the housing 31 and is turned on by a press on a protrusion 33a. The elastic transmission member 34 is made of an elastic material such as synthetic rubber. The elastic transmission member 34 is disposed in the housing 31 to transmit a press on the push button 32 to the contact part 33 while being elastically deformed. The mounting band section 35 is attached to the handlebar 5 and is substantially C-shaped (a notch on a ring section) in side view. A fixing screw 37A and a nut 37B are attached to the mounting band section 35. A resistor and the contact part 33 mounted on the substrate 36 are placed in the housing 31, specifically, on the bottom of the second housing section 31B. The substrate 36 is connected to a code 39 that transmits an output signal of the switch device 14 to the controller 13 (see FIG. 2).

In this configuration, the push button 32 is attached while being supported in an extendable and retractable manner in the first housing section 31A. Specifically, as illustrated in FIGS. 4 and 5, the push button 32 is an integral unit including a large-diameter cylindrical section 32b that cylindrically extends downward with a large diameter from the outer periphery of the pressing section 32a, a small-diameter cylindrical section 32c that cylindrically extends downward with a small diameter from the center of the pressing section 32a, claw sections 32d that extend downward at three circumferential points from the lower edge of the large-diameter cylindrical section 32b, and a groove section 32e for greasing on a part of the large-diameter cylindrical section 32b. The first housing section 31A is an integral unit including a housing body 31Ac that forms the outer shell of the housing 31, a large-diameter guide wall 31Aa that guides the large-diameter cylindrical section 32b of the push button 32, a small-diameter guide wall 31Ab that guides the small-diameter cylindrical section 32c of the push button 32, a connecting wall 31Ad that connects the end of the large-diameter guide wall 31Aa and the end of the small-diameter guide wall 31Ab, and an insertion hole 31Ae that allows the passage of the claw sections 32d of the push button 32 on the connecting wall 31Ad. The biasing spring (biasing member) 38 composed of a coil spring is disposed between the back side of the pressing section 32a of the push button 32 and the connecting wall 31Ad of the first housing section 31A. The biasing spring 38 biases the push button 32 in a projecting direction. The claw sections 32d of the push button 32 can be elastically locked to the end of the large-diameter guide wall 31Aa of the first housing section 31A, preventing the push button 32 from being removed from the first housing section 31A. Thus, while the push button 32 is guided by the large-diameter guide wall 31Aa and the small-diameter guide wall 31Ab of the first housing section 31A, the push button 32 is supported by the first housing section 31A so as to extend or retract to or from the outside such that the claw sections 32d of the push button 32 are in contact with the end of the large-diameter guide wall 31Aa of the first housing section 31A. The groove section 32e for greasing on a part of the large-diameter cylindrical section 32b of the push button 32 is filled with a waterproof filler such as grease (not shown), improving waterproofness. The groove section 32e and the waterproof filler may be optionally provided.

The elastic transmission member 34 is fit onto the lower end of the small-diameter cylindrical section 32c of the push button 32. When the push button 32 is pressed, the elastic transmission member 34 presses the protrusion 33a of the contact part 33 while being elastically deformed, turning on the contact part 33.

In the switch device 14, the second housing section 31B is integrally formed with the mounting band section 35 for attaching the switch device 14 to the handlebar 5. The second housing section 31B and the mounting band section 35 are made of a softer material than the first housing section 31A. For example, the first housing section 31A and the second housing section 31B (and the mounting band section 35) are made of synthetic resin, the first housing section 31A is made of a relatively rigid material, e.g., ABS resin, and the second housing section 31B and the mounting band section 35 are made of a soft material, e.g., polypropylene. The first housing section 31A and the second housing section 31B are not limited to these materials.

The substrate 36 placed on the bottom of the second housing section 31B is fixed by a screw or the like. As illustrated in FIG. 4, the second housing section 31B is filled with a cured sealer 42 composed of resin for curing. In other words, the second housing section 31B undergoes so-called potting. The sealer 42 covers the substrate 36, a connecting portion between the substrate 36 and the contact part 33, a connecting portion between the substrate 36 and the code 39, the resistor mounted on the substrate 36, and so on.

In the arrangement of FIG. 4, the inner periphery of the lower edge of the first housing section 31A and the upper edge of the second housing section 31B are joined to each other. The outer periphery of a joint part S is covered with a lower-end outer edge 31Af of the first housing section 31A, precluding the entry of rain or the like into the housing 31 from the joint part S.

The first housing section 31A and the second housing section 31B are joined to each other at two points by housing connecting screws 40 that penetrate the second housing section 31B and are inserted upward into tapped holes 31Ah in the first housing section 31A. Furthermore, connecting claw sections 31Ag are integrally formed at two points with the first housing section 31A so as to project downward from the sides of the first housing section 31A. The first housing section 31A and the second housing section 31B are joined to each other also by elastically engaging the connecting claw sections 31Ag with engaged sections 31Bf through claw insertion holes 31Bc formed on the second housing section 31B, the engaged sections 31Bf being provided outside the claw insertion holes 31Bc (so-called snap-fit structure). The claw insertion holes 31Bc formed on the second housing section 31B vertically penetrate the second housing section 31B and the lower ends of the holes are opened to an outer space.

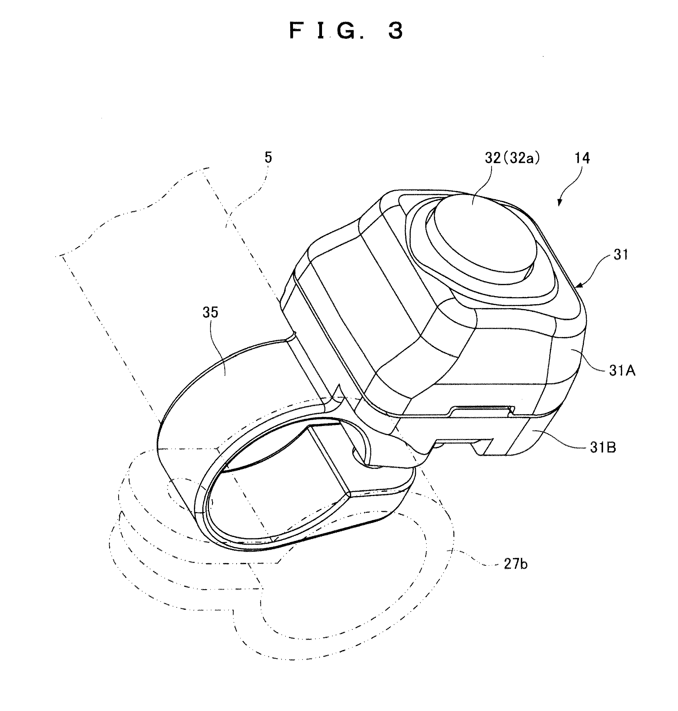

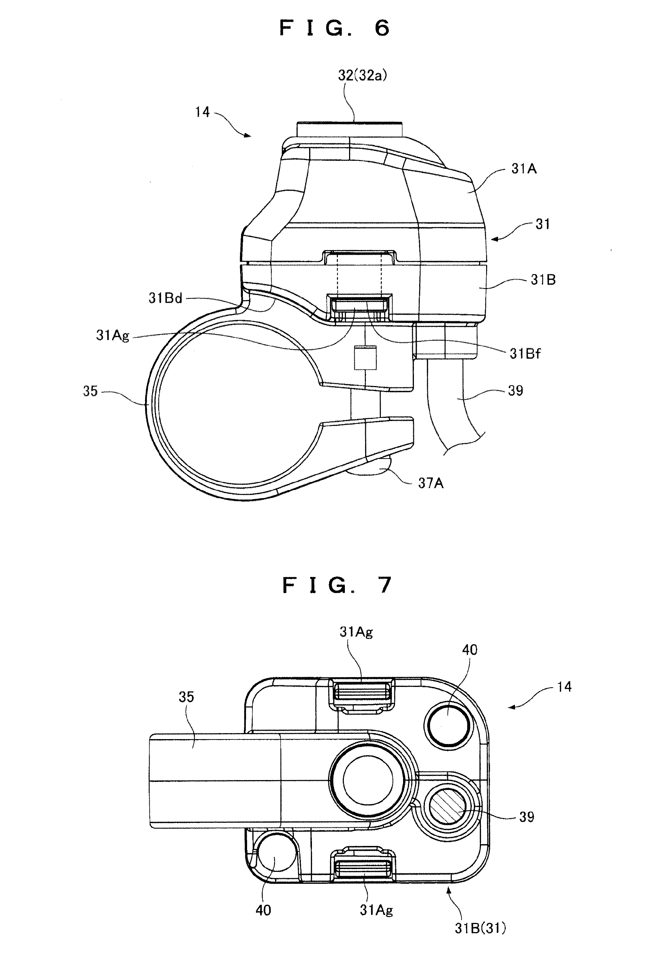

As illustrated in FIGS. 3, 5, and 6, the outermost lower end 31Af corresponding to the bases of the connecting claw sections 31Ag on the first housing section 31A is notched, allowing inward deformation of the connecting claw sections 31Ag when the first housing section 31A is removed from the second housing section 31B. Accordingly, rain or the like may enter from the bases of the connecting claw sections 31Ag. However, the claw insertion holes 31Bc for the insertion of the connecting claw sections 31Ag are separated from the interior of the housing 31 by the outer walls of the claw insertion holes 31Bc and penetrate the second housing section 31B downward, and thus rain or the like is discharged from the lower ends through the claw insertion holes 31Bc, keeping high waterproofness.

The switch device 14 is used for self-riding (or low-speed self-riding during walking with the electric bicycle 1) with a press on the push button 32 during riding of the electric bicycle 1 or walking with the electric bicycle 1. The push button 32 of the switch device 14 is desirably pressed without removing hands from the grip sections 29 of the handlebar 5. Thus, a recessed section 31Bd is formed on the second housing section 31B such that the brake-lever mounting band section 27b for attaching the brake lever 27 to the handlebar 5 is fit between the second housing section 31B and the handlebar 5, thereby locating the switch device 14 as close as possible to the grip sections 29 on two ends of the handlebar 5. Thus, even if the mounting band section 35 of the switch device 14 is located near the brake-lever mounting band section 27b, the housing 31 of the switch device 14 does not interfere with the brake-lever mounting band section 27b.

With this configuration, the first housing section 31A that supports the push button 32 in an extendable and retractable manner is made of a harder material than the second housing section 31B, allowing the first housing section 31A to have relatively high structural rigidity. The push button 32 can be satisfactorily supported by the first housing section 31A having relatively high rigidity.

Since the second housing section 31B and the mounting band section 35 are made of a softer material than the first housing section 31A, the mounting band section 35 can be easily curved. Hence, when the switch device 14 is attached to the handlebar 5, the easily curved mounting band section 35 can be directly fit onto the handlebar 5 from the outside in a state in which the brake lever 27 and the gear shifting unit 51 are attached to the handlebar 5. Consequently, the switch device 14 can be efficiently attached to the handlebar.

With this configuration, the push button 32 is supported only by the first housing section 31A in an extendable and retractable manner. Thus, even if the push button 32 cannot fully extend or retract because of damage on the push button 32 or foreign matters between the push button 32 and the first housing section 31A, it is only necessary to change the push button 32 and the first housing section 31A. Therefore, the cost of repair can be minimized unlike in the replacement of the overall switch device 14.

Furthermore, with this configuration, the recessed section 31Bd is formed on the second housing section 31B such that the brake-lever mounting band section 27b for attaching the brake lever 27 to the handlebar 5 can be fit into the recessed section 31Bd. Thus, the switch device 14 can be easily set next to the brake lever 27 on the handlebar 5, that is, near the grip section 29 on the handlebar 5. This facilitates an operation of the push button 32 of the switch device 14 and keeps high operability.

With this configuration, the substrate 36 bearing the contact part 33 is covered with the sealer 42 such as resin (potting) in the second housing section 31B. Even if rain or the like enters the housing 31, the substrate 36 is not soaked in water, causing no problems. Hence, the switch device 14 can be more reliable. Moreover, with this configuration, the outer periphery of the joint part S between the first housing section 31A and the second housing section 31B is covered with the outermost lower end 31Af of the first housing section 31A. Thus, rain or the like hardly enters the housing 31 from the joint part S (see FIG. 4). This configuration also improves waterproofness so as to satisfactorily keep the reliability of the switch device 14. Furthermore, with this configuration, the claw insertion holes 31Bc are provided for the insertion of the connecting claw sections 31Ag that connect the first housing section 31A and the second housing section 31B. Since the claw insertion holes 31Bc penetrate the second housing section 31B downward, rain or the like entering the claw insertion holes 31Bc is discharged to the outside through the claw insertion holes 31Bc, thereby keeping high waterproofness.

With this configuration, the first housing section 31A and the second housing section 31B are joined not only by the housing connecting screws 40 but also by the connecting claw sections 31Ag formed on the first housing section 31A. Thus, even if the housing connecting screws 40 connecting the first housing section 31A and the second housing section 31B are loosened or removed, the connecting claw sections 31Ag formed on the first housing section 31A are engaged with the second housing section 31B, preventing the separation of the first housing section 31A and the second housing section 31B. Hence, the high reliability of the switch device 14 can be kept.

On the contact part 33 of the switch device 14, which is also called a tact switch, the protrusion 33a is extended and retracted by 0.3 mm to 0.8 mm, which is an extremely small amount of pressing (stroke). Unfortunately, when the push button 32 is pressed, such a small amount of pressing only allows a small clicking feel (feeling of switching when the push button 32 is pressed), whereas an extremely strong press may break the contact part 33. To address this problem, in the switch device 14 according to the present embodiment, the push button 32 is disposed so as to extend and retract from and into the first housing section 31A via the biasing spring 32. Thus, the stroke of the pressed push button 32 can be relatively large. Furthermore, the elastic transmission member 34 is disposed between the push button 32 and the contact part 33 to transmit a press on the push button 32 to the contact part 33 while being elastically deformed. Thus, even if the stroke of the contact part 33 is extremely small, the stroke of the push button 32 can be relatively large and the contact part 33 can be fully turned on, achieving improved operability and satisfactorily maintained reliability.

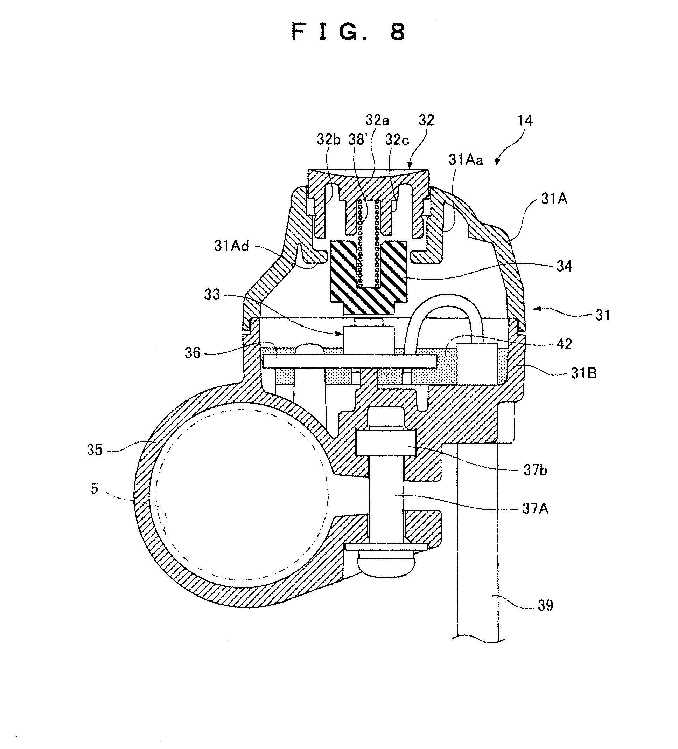

In the switch device 14 according to the present embodiment, the biasing spring 38 that biases the push button 32 in the projecting direction is disposed between the large-diameter cylindrical section 32b and the small-diameter cylindrical section 32c of the push button 32. The arrangement of the biasing spring 38 is not limited as long as the push button 32 can be biased in the projecting direction. Moreover, the elastic transmission member 34 of the switch device 14 is not limited to the shape in FIGS. 4 and 5 as long as a press on the push button 32 can be transmitted to the contact part. For example, as illustrated in FIG. 8, a biasing spring 38' that biases the push button 32 in the projecting direction may be disposed in the small-diameter cylindrical section 32c of the push button 32 such that the ends of the biasing spring 38' are in contact with the back side of the pressing section 32a of the push button 32 and the elastic transmission member 34. The claw sections 32d of the push button 32 are omitted in FIG. 8, though the same claw sections are provided as in FIG. 4 and so on.

In the present embodiment, the push button 32 is placed face up in the switch device 14. The orientation of the push button 32 is not limited to this and thus the push button 32 may be oriented diagonally to the rear or to the rear in the switch device 14.

In the switch device 14 according to the present embodiment, the push button 32 of the switch device 14 is pressed to turn on the contact part 33, enabling self-riding of the electric bicycle 1 without pressing the pedals 6. The present embodiment is particularly suitable as the switch device 14 having this function in the electric bicycle 1. The present embodiment is also applicable to switch devices having other functions. For example, the operating section 12 in FIG. 2 is also a kind of switch device attached to the handlebar 5. The operating section 12 has a switching function of turning on or off an auxiliary driving force generating function (so-called assist function) for the electric bicycle and a switching function of adjusting an auxiliary driving force. The operating section 12 having these functions may have the same structure as the switch device 14.

### Industrial Applicability

The present invention is particularly suitable as a switch device for an electric bicycle that can be driven by an auxiliary driving force generated by an electric motor in addition to a human power. The present invention is also usable as a switch device attached to an ordinary bicycle.

## Claims

1. A switch device for an electric bicycle, the switch device attachable to a handlebar (5) of the electric bicycle that is capable of being driven by an auxiliary driving force generated by an electric motor in addition to a human power, the switch device comprising:
a housing (31) including a first housing section (31 A) and a second housing section (31 B);
a push button (32) that has an operation pressing section (32a) and is attached in an extendable and retractable manner while being exposed out of the housing (31);
a contact part (33) disposed in the housing (31);
an elastic transmission member (34) that is disposed in the housing (31) to transmit a press on the push button (32) to the contact part (33) while being elastically deformed;
and
a mounting band section (35) that is attachable to the handlebar (5) and is substantially C-shaped in side view,
wherein the second housing section (31 B) and the mounting band section (35) are integrally formed, and
**characterized in that**
the second housing section (31 B) and the mounting band section (35) are made of a softer material than the first housing section (31 A) so that the push button (32) is supported by the the first housing section with a relatively high rigidity and it is facilitated easily curving the mounting band section for direct fit onto the handlebar (5).

2. The switch device for an electric bicycle according to claim 1, further comprising a recessed section (31 Bd) formed on the second housing section (31 B) such that a brake-lever mounting band section (27b, 28b) for attaching a brake lever (27) to the handlebar (5) is fit into the recessed section.

3. The switch device for an electric bicycle according to claim 1, wherein the push button (32) is attached while being supported in the first housing section (31 A) in an extendable and retractable manner.

4. The switch device for an electric bicycle according to claim 1, further comprising a substrate (36) bearing the contact part (33), the substrate (36) being disposed in the second housing section (31 B) while being covered with a sealer (42).

5. The switch device for an electric bicycle according to claim 1, wherein the first housing section (31A) and the second housing section (31 B) are joined to each other by housing connecting screws (40),
the first housing section (31A) includes connecting claw sections (31Ag) that are integrated with the first housing section (31A) and are capable of being engaged with the second housing section (31 B), and
the first housing section (31A) and the second housing section (31 B) are joined to each other also by the connecting claw sections (31Ag).

6. The switch device for an electric bicycle according to claim 1, wherein the first housing section (31A) is disposed in an upper half of the housing (31) while the second housing section (31 B) is disposed in a lower half of the housing (31),
a joint part between the first housing section (31A) and the second housing section (31 B) is covered with a lower-end outer edge of the first housing section (31A), and
an insertion hole (31Ae) for insertion of the claw section formed on the first housing section (31A) is formed partially on a side of the second housing section (31B), the insertion hole vertically penetrating the second housing section (31 B).

7. An electric bicycle comprising the switch device (14) according to claim 1.

8. The electric bicycle according to claim 7, wherein the electric bicycle enables self-riding without pedaling when the push button (32) of the switch device (14) is pressed to turn on the contact part (33).

## Patentansprüche

1. Schaltvorrichtung für ein Elektrofahrrad, wobei die Schaltvorrichtung an einem Lenker (5) des Elektrofahrrads anbringbar ist, das in der Lage ist, mittels einer Hilfsantriebskraft angetrieben zu werden, die von einem Elektromotor zusätzlich zur menschlichen Kraft erzeugt wird, wobei die Schalteinrichtung umfasst:
ein Gehäuse (31) mit einem ersten Gehäuseabschnitt (31A) und einem zweiten Gehäuseabschnitt (31 B);
einem Druckknopf (32), der einen Betätigungsdruckabschnitt (32a) aufweist und in einer ausziehbaren und zurückziehbaren Weise angebracht ist, während er außerhalb des Gehäuses (31) freiliegend ist;
ein Kontaktteil (33), das in dem Gehäuse (31) angeordnet ist;
ein elastisches Übertragungselement (34), das in dem Gehäuse (31) zur Übertragung eines Drückens auf den Druckknopf (32) zu dem Kontaktteil (33) angeordnet ist und dabei eine elastische Deformation vollführt; und
einen Montierbandabschnitt (35), der an dem Lenker (5) anbringbar und in Seitenansicht im Wesentlichen C-förmig ist,
wobei der zweite Gehäuseabschnitt (31 B) und der Montierbandabschnitt (35) als Einheit ausgebildet sind, und
**dadurch gekennzeichnet, dass**
der zweite Gehäuseabschnitt (31 B) und der Montierbandabschnitt (35) aus einem weicheren Material als der erste Gehäuseabschnitt (31A) hergestellt sind, so dass der Druckknopf (32) von dem ersten Gehäuseabschnitt mit einer relativ höheren Steifigkeit gehalten ist und einfaches Krümmen des Montierbandabschnitts für ein direktes Anpassung an den Lenker (5) ermöglicht ist.

2. Schaltvorrichtung für ein Elektrofahrrad gemäß Anspruch, die ferner einen abgesenkten Abschnitt (31 Bd) aufweist, der auf dem zweiten Gehäuseabschnitt (31 B) derart ausgebildet ist, dass ein Bremshebel-Montierbandabschnitt (27b, 28b) zum Anbringen eines Bremshebels (27) an dem Lenker (5) in den abgesenkten Abschnitt eingepasst ist.

3. Schaltvorrichtung für ein Elektrofahrrad nach Anspruch 1, wobei der Druckknopf (32) angebracht ist, so dass er in dem ersten Gehäuseabschnitt (31A) in einer ausziehbaren und zurückziehbaren Weise gehalten ist.

4. Schaltvorrichtung für ein Elektrofahrrad nach Anspruch 1, die ferner einen Träger (36), der das Kontaktteil (33) trägt, aufweist, wobei der Träger (36) in dem zweiten Gehäuseabschnitt (31 B) angeordnet ist, während er von einer Dichteinheit (42) abgedeckt ist.

5. Schaltvorrichtung für ein Elektrofahrrad nach Anspruch 1, wobei der erste Gehäuseabschnitt (31A) und der zweite Gehäuseabschnitt (31B) durch Gehäuseverbindungsschrauben (40) miteinander verbunden sind,
wobei der erste Gehäuseabschnitt (31A) Verbindungsbackenabschnitte (31Ag) enthält, die mit dem ersten Gehäuseabschnitt (31A) als Einheit ausgebildet und in der Lage sind, sich mit dem zweiten Gehäuseabschnitt (31 B) zu verbinden, und
wobei der erste Gehäuseabschnitt (31A) und der zweite Gehäuseabschnitt (31 B) du rch die Verbindungsbackenabschnitte (31 Ag) miteinander verbunden sind.

6. Schaltvorrichtung für ein Elektrofahrrad nach Anspruch 1, wobei der erste Gehäuseabschnitt (31A) in einer oberen Hälfte des Gehäuses (31) angeordnet ist, während der zweite Gehäuseabschnitt (31B) in einer unteren Hälfte des Gehäuses (31) angeordnet ist,
wobei ein Verbindungsteil zwischen dem ersten Gehäuseabschnitt (31A) und dem zweiten Gehäuseabschnitt (31 B) von einem Außenrand des unteren Endes des ersten Gehäuseabschnitt (31 A) abgedeckt ist, und
wobei eine Einführöffnung (31Ae) für die Einführung des Backensabschnitts, der auf dem ersten Gehäuseabschnitt (31A) ausgebildet ist, teilweise an einer Seite des zweiten Gehäuseabschnitts (31 B) ausgebildet ist, wobei die Einführöffnung vertikal in den zweiten Gehäuseabschnitt (31 B) hineinragt.

7. Elektrofahrrad, das die Schalteinrichtung (14) nach Anspruch 1 umfasst.

8. Elektrofahrrad nach Anspruch 7, wobei das Elektrofahrrad Selbstfahren ohne Treten ermöglicht, wenn der Druckknopf (32) der Schaltvorrichtung (14) zum Einschalten des Kontaktteils (33) gedrückt ist.

## Revendications

1. Un dispositif de commutation pour une bicyclette électrique, le dispositif de commutation pouvant être fixé a un guidon (5) de la bicyclette électrique qui est capable d'être conduit par une force de conduite auxiliaire générée par un moteur électrique en supplément d'une force humaine, le dispositif de commutation comprenant:
un boitier (31) incluant une première section boitier (31 A) et une seconde section boitier (31B);
un bouton poussoir (32) qui a une section d'opération de compression (32a) et est attaché d'une manière extensible et rétractable tout en étant exposé hors du boitier (31);
une partie de contact (33) placée dans le boitier (31);
un membre de transmission élastique (34) qui est placé dans le boitier (31) pour transmettre une pression sur le bouton poussoir (32) vers la partie de contact (33) tout en étant déformé élastiquement;
et
une section bande de montage (35) qui peut être fixée au guidon (5) et est substantiellement en forme de C d'une vue de profil,
où la seconde section boitier (31 B) et la section bande de montage (35) sont formées intégralement, et
sont caractérisées à l'intérieur
la seconde section boitier (31 B) et la section bande de montage (35) sont faites d'un matériau plus doux que celui de la première section boitier (31 A) afin que le bouton poussoir (32) soit supporté par la première section boitier avec une rigidité relativement élevée et qu'il soit facilité la courbature de la section bande de montage pour s'adapter directement sur le guidon (5).

2. Le dispositif de commutation pour une bicyclette électrique selon la revendication 1, comprenant en outre une section renfoncée (31 Bd) formée sur la seconde section boitier (31 B) afin qu'une section levier de frein de la bande de montage (27b, 28b) pour attacher un levier de frein (27) au guidon (5) soit placée dans la section renfoncée.

3. Le dispositif de commutation pour une bicyclette électrique selon la revendication 1, où le bouton poussoir (32) est attaché tout en étant supporté dans la première section boitier (31 A) d'une manière extensible et rétractable.

4. Le dispositif de commutation pour une bicyclette électrique selon la revendication 1, comprenant en outre un substrat (36) supportant la partie de contact (33), le substrat (36) étant placé dans la seconde section boitier (31B) tout en étant couvert par une fermeture (42).

5. Le dispositif de commutation pour une bicyclette électrique selon la revendication 1, où la première section boitier (31 A) et la seconde section boitier (31B) sont jointes entre elles par des vis de connexion de boitier (40),
la première section boitier (31 A) inclue des sections de griffes de fixation (31Ag) qui sont intégrées avec la première section boitier (31A) et sont capable d'être engagées avec la seconde section boitier (31B), et
la première section boitier (31A) et la seconde section boitier (31B) sont également jointes entre elles par les sections de griffes de fixation (31Ag).

6. Le dispositif de commutation pour une bicyclette électrique selon la revendication 1, où la première section boitier (31A) est placée dans une partie supérieure du boitier (31) tandis que la seconde section boitier (31B) est placée dans une partie inférieure du boitier (31),
une partie jointe entre la première section boitier (31A) et la seconde section boitier (31B) est couverte avec un bord extérieur inferieur de la première section boitier (31 A), et
un trou d'insertion (31Ae) pour l'insertion de la section de griffe formée sur la première section boitier (31 A) est formée partiellement sur un coté de la seconde section de boitier (31B), le trou d'insertion pénétrant verticalement la seconde section boitier (31B).

7. Une bicyclette électrique comprenant le dispositif de commutation (14) selon la revendication 1.

8. La bicyclette électrique selon la revendication 7, où la bicyclette électrique permet l'auto-déplacement sans pédalage quand le bouton poussoir (32) du dispositif de commutation (14) est pressé pour allumer la partie de contact (33).
